# EUROPEAN PATENT APPLICATION

(11) **EP 3 937 134 A1**
(43) Date of publication of application: **12.01.2022**
(21) Application number: 21178801.3
(22) Date of filing: 10.06.2021
(51) Int. Cl.: G06T 11/00, G06K 9/00

(54) **IMAGE PROCESSING METHOD AND DEVICE, AND ELECTRONIC DEVICE**

(30) Priority: 18.12.2020 CN 202011503570
(71) Applicant: BEIJING BAIDU NETCOM SCIENCE AND TECHNOLOGY CO. LTD., 100085 Beijing (CN)
(72) Inventor: SUN, Hao, Beijing (CN); LI, Fu, Beijing (CN); LIN, Tianwei, Beijing (CN); HE, Dongliang, Beijing (CN)
(74) Representative: Studio Torta S.p.A.

(57) **Abstract**

The present disclosure provides an image processing method, an image processing device and an electronic device, and relates to the field of computer vision and deep learning. The image processing method includes: acquiring a first image and a second image; performing semantic region segmentation on the first image and the second image to acquire a first segmentation image and a second segmentation image respectively; determining an association matrix between the first segmentation image and the second segmentation image; and processing the first image in accordance with the association matrix to acquire a target image. Because an association relation between semantic regions in the first image and the second image, i.e., semantic information about the first image and the second image, has been taken into consideration, it is able to provide the target image with a better effect, thereby to improve a style transfer effect.

## Description

### TECHNICAL FIELD

The present disclosure relates to the field of artificial intelligence, in particular to a computer vision technology and a deep learning technology, more particularly to an image processing method, an image processing device and an electronic device.

### BACKGROUND

Image stylization refers to the generation of a new image in accordance with a given content image and a given style image. The new image retains a semantic content in the content image, e.g., such information as facial features, hair accessories, mountains or buildings in the content image, together with a style of the style image such as color and texture.

### SUMMARY

An object of the present disclosure is to provide an image processing method, an image processing device and an electronic device.

In a first aspect, the present disclosure provides in some embodiments an image processing method, including: acquiring a first image and a second image; performing semantic region segmentation on the first image and the second image to acquire a first segmentation image and a second segmentation image respectively; determining an association matrix between the first segmentation image and the second segmentation image; and processing the first image in accordance with the association matrix to acquire a target image.

In a second aspect, the present disclosure provides in some embodiments an image processing device, including: an acquisition module configured to acquire a first image and a second image; a segmentation module configured to perform semantic region segmentation on the first image and the second image to acquire a first segmentation image and a second segmentation image respectively; a determination module configured to determine an association matrix between the first segmentation image and the second segmentation image; and a processing module configured to process the first image in accordance with the association matrix to acquire a target image.

In a third aspect, the present disclosure provides in some embodiments an electronic device, including at least one processor and a memory configured to be in communication connection with the at least one processor. The memory is configured to store therein an instruction capable of being executed by the at least one processor, wherein the processor is configured to execute the instruction to implement the image processing method in the first aspect.

In a fourth aspect, the present disclosure provides in some embodiments a non-transient computer-readable storage medium storing therein a computer instruction. The computer instruction is configured to be executed by a computer to implement the image processing method in the first aspect.

In a fifth aspect, the present disclosure provides in some embodiments a computer program product comprising a computer program. When the computer program is executed by a processor, the image processing method in the first aspect is implemented.

It should be understood that, this summary is not intended to identify key features or essential features of the embodiments of the present disclosure, nor is it intended to be used to limit the scope of the present disclosure. Other features of the present disclosure will become more comprehensible with reference to the following description.

### BRIEF DESCRIPTION OF THE DRAWINGS

The following drawings are provided to facilitate the understanding of the present disclosure, but shall not be construed as limiting the present disclosure. In these drawings,
Fig.1 is a flow chart of an image processing method according to an embodiment of the present disclosure;
Figs.1a-1c are schematic views showing images according to an embodiment of the present disclosure;
Fig.2 is another flow chart of the image processing method according to an embodiment of the present disclosure;
Fig.3 is yet another flow chart of the image processing method according to an embodiment of the present disclosure;
Fig.4 is a structural schematic view showing an image processing device according to an embodiment of the present disclosure; and
Fig.5 is a block diagram of an electronic device for implementing the image processing method according to an embodiment of the present disclosure.

### DETAILED DESCRIPTION

In the following description, numerous details of the embodiments of the present disclosure, which should be deemed merely as exemplary, are set forth with reference to accompanying drawings to provide a thorough understanding of the embodiments of the present disclosure. Therefore, those skilled in the art will appreciate that modifications or replacements may be made in the described embodiments without departing from the scope and spirit of the present disclosure. Further, for clarity and conciseness, descriptions of known functions and structures are omitted.

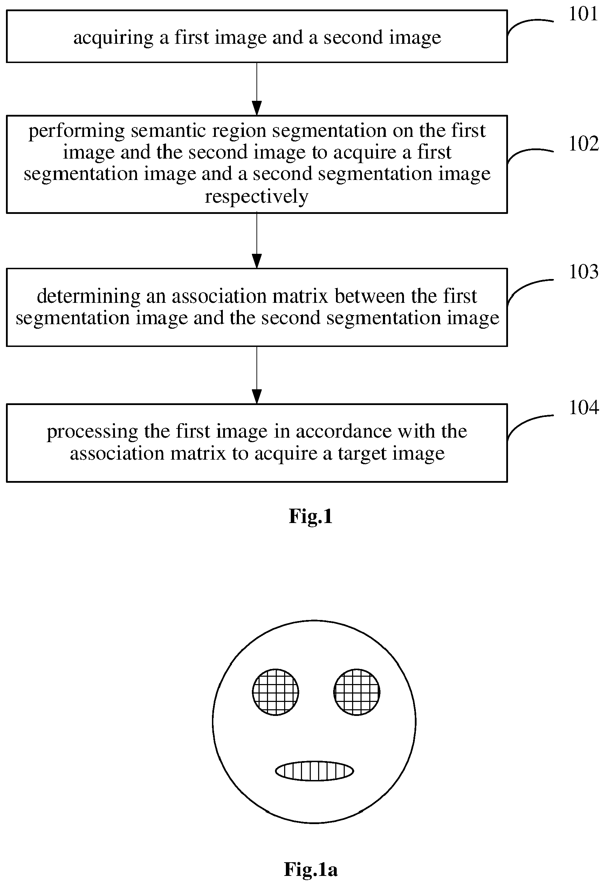

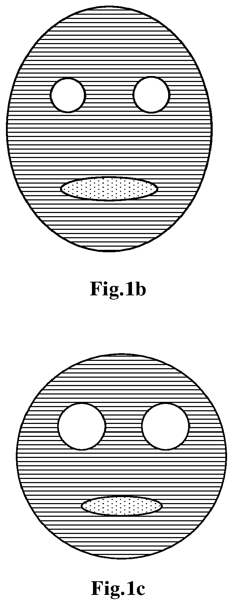

Fig. 1 is a flow chart of an image processing method according to an embodiment of the present disclosure. As shown in Fig.1, the image processing method for an electronic device includes the following steps.

Step 101: acquiring a first image and a second image.

The first image may have a same size as the second image. The first image may be taken by a camera of the electronic device, or downloaded from a network, which will not be particularly defined herein. Identically, the second image may be taken by the camera of the electronic device, or downloaded from the network, which will not be particularly defined herein. The second image may have a special style feature, e.g., a painting style, a Chinese painting style, a retro style, etc.

Step 102: performing semantic region segmentation on the first image and the second image to acquire a first segmentation image and a second segmentation image respectively.

The semantic region segmentation may be performed on the first image. For example, the first image including a face may be segmented into six semantic regions in accordance with eye, eyebrow, lip, cheek, hair and background using a known semantic segmentation model. The second image may also be segmented into different semantic regions using the semantic segmentation model. Further, the first or second image may be segmented into the semantic regions artificially to acquire the first segmentation image or the second segmentation image. Different marks may be adopted for pixel points at different semantic regions in the first segmentation image, and a same mark may be adopted for pixel points at a same semantic region. Identically, different marks may be adopted for pixel points at different semantic regions in the second segmentation image, and a same mark may be adopted for pixel points at a same semantic region. It should be appreciated that, a same mark may be adopted for the pixel points at a same semantic region in the first segmentation image and the second segmentation image. For example, a mark adopted for an eye region in the first segmentation image may be the same as a mark adopted for an eye region in the second segmentation image, and a pixel value at the eye region may be set as black (i.e., the mark may be the same).

The first segmentation image may consist of only one image or include a plurality of first sub-images. When the first segmentation image consists of one image, the semantic regions in the image may be marked to acquire the first segmentation image. When the first segmentation image includes a plurality of first sub-images, only one semantic region of the first image may be marked in each first sub-image, and each of the other semantic regions may be provided with another mark, e.g., the pixel point at the other semantic region may be marked as white. Based on the above, when the first image has six semantic regions, the first segmentation image may include six first sub-images, and each first sub-image may have a same size as the first segmentation image.

Identically, the second segmentation image may consist of only one image or include a plurality of second sub-images. When the second segmentation image consists of one image, the semantic regions in the image may be marked to acquire the second segmentation image. When the second segmentation image includes a plurality of second sub-images, only one semantic region of the second image may be marked in each second sub-image, and each of the other semantic regions may be provided with another mark, e.g., the pixel point at the other semantic region may be marked as white. Based on the above, when the second image has six semantic regions, the second segmentation image may include six second sub-images, and each second sub-image may have a same size as the second segmentation image.

When the semantic regions of the segmentation image are located in a same image or the semantic region is individually located in one sub-image, a position of the semantic region in the image (the one segmentation image or the one sub-image) may be the same, and the pixel points in the semantic region may be the same too. In other words, regardless of either of the above-mentioned two modes for acquiring the segmentation image, the position of the semantic region being acquired may not be adversely affected. In this regard, when the first segmentation image consists of one image, the second segmentation image may consist of one image or include a plurality of second sub-images, or when the first segmentation image includes a plurality of first sub-images, the second segmentation image may consist of one image or include a plurality of second sub-images.

It should be appreciated that, the first segmentation image and the second segmentation may at least include a same semantic region.

Step 103: determining an association matrix between the first segmentation image and the second segmentation image.

The first segmentation image and the second segmentation image may each include a plurality of semantic regions, and an association relation between the semantic regions of the first segmentation image and the semantic regions of the second segmentation image may be established to acquire the association matrix. For example, an association relation between pixel points at a same semantic region in the first segmentation image and the second segmentation image and a non-association relation between pixel points at different semantic regions in the first segmentation image and the second segmentation image may be established, to finally acquire the association matrix.

Step 104: processing the first image in accordance with the association matrix to acquire a target image.

For example, a same semantic region in the first image and the second image may be acquired in accordance with the association matrix, and pixel values of pixel points at the semantic region may be adjusted, e.g., replaced or optimized, in accordance with pixel values at the corresponding semantic region in the second image, to acquire the target image with a same or similar image style as the second image, thereby to achieve a style transfer of the second image. For example, the six semantic regions, i.e., eye, eyebrow, lip, cheek, hair and background, in the first image may be colored in accordance with colors of the corresponding six semantic regions of the eye, eyebrow, lip, cheek, hair and background in the second image respectively. Through the above way, it is merely necessary for a user to acquire the target image with a same image style as the second image in accordance with one first image, thereby to meet the individualized requirements of more users.

Fig.1a shows the first image, Fig.1b shows the second image and Fig.1c shows the target image. As shown in Fig.1c, the cheek, eye and lip in the first image are in same colors as the cheek, eye and lip in the second image respectively, i.e., the target image is just an image acquired after transferring a style of the second image to the first image.

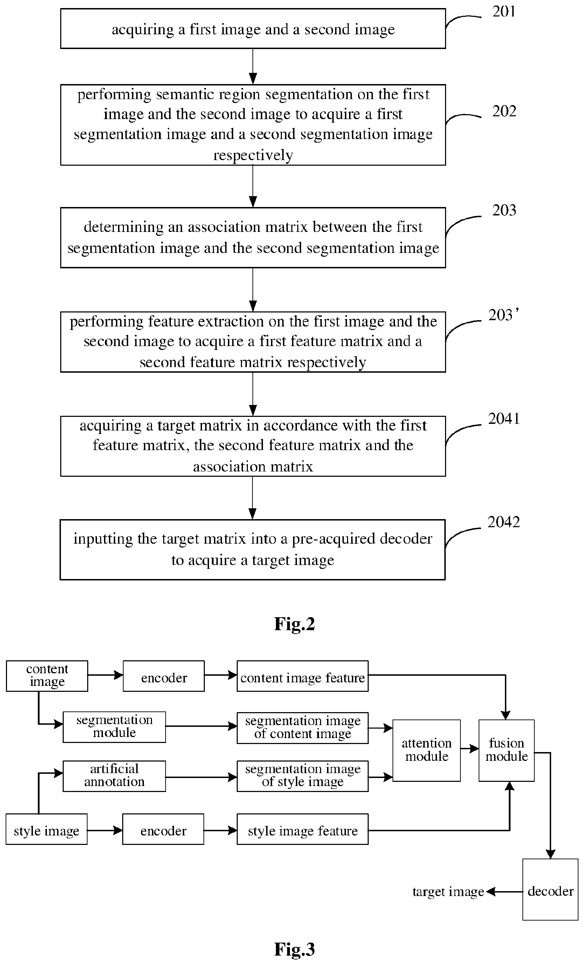

In this embodiment of the present disclosure, the first image and the second image may be acquired, the semantic region segmentation may be performed on the first image and the second image to acquire the first segmentation image and the second segmentation image respectively, the association matrix between the first segmentation image and the second segmentation image may be determined, and then the first image may be processed in accordance with the association matrix to acquire the target image. Because the association relation between the semantic regions in the first image and the second image, i.e., semantic information about the first image and the second image, has been taken into consideration, it is able to provide the target image with a better effect, thereby to improve a style transfer effect. Fig.2 is a flow chart of an image processing method according to an embodiment of the present disclosure. As shown in Fig.2, the image processing method for an electronic device includes the following steps.

Step 201: acquiring a first image and a second image.

Step 202: performing semantic region segmentation on the first image and the second image to acquire a first segmentation image and a second segmentation image respectively.

Step 203: determining an association matrix between the first segmentation image and the second segmentation image.

Steps 201 to 203 may be the same as Steps 101 to 103. The description about Steps 201 to 203 may refer to that about Steps 101 to 103, and thus will not be particularly defined herein. Step 203': performing feature extraction on the first image and the second image to acquire a first feature matrix and a second feature matrix respectively.

The feature extraction may be performed on the first image to acquire image features of the first image, and the image features of the first image may be represented in the form of a matrix, i.e., the first feature matrix. The feature extraction may be performed on the second image to acquire image features of the second image, and the image features of the second image may also be represented in the form of a matrix, i.e., the second feature matrix. A feature extraction mode of the first image may be the same as that of the second image, and the first feature matrix may have a same dimension as the second feature matrix.

Further, Step 203' of performing the feature extraction on the first image and the second image to acquire the first feature matrix and the second feature matrix may include: inputting the first image to a pre-acquired convolutional neural network model to acquire the first feature matrix, the first feature matrix being determined in accordance with output results from two first intermediate layers of the convolutional neural network model; and inputting the second image to the convolutional neural network model to acquire the second feature matrix, the second feature matrix being determined in accordance with output results from two second intermediate layers of the convolutional neural network model.

In the above description, the convolutional neural network model may be a trained model in the prior art, and this model may be used to perform the feature extraction on the image. In this embodiment of the present disclosure, the first image may be inputted into the convolutional neural network model, and the acquired first feature matrix may be the output results from two first intermediate layers of the convolutional neural network model rather than an output result of the convolutional neural network model. The two intermediate layers may be two intermediate layers of the convolutional neural network model adjacent to each other or not adjacent to each other. For example, for the convolutional neural network mode having 5 network layers, output results from a third layer and a fourth layer may be extracted as the first feature matrix. The second image may be processed in a same way as the first image, to acquire the second feature matrix. It should be appreciated that, the two first intermediate layers may be the same as, or different from, the two second intermediate layers. For example, in the above example, the first feature matrix may be determined in accordance with output results from the third layer and the fourth layer, while the second feature matrix may be determined in accordance with output results from a second layer and the fourth layer.

The convolutional neural network model may be specifically a visual geometry group (VGG) network model which uses several consecutive 3×3 convolutional kernels to replace a relatively large convolutional kernel (e.g., an 11×11, 7×7 or 5×5 convolutional kernel). For a given receptive field, the use of stacked small convolutional kernels may be advantageous over the use of a large convolutional kernel. Through multiple non-linear layers, it is able to increase a network depth, thereby to learn a more complex mode at a relatively low cost.

The trained VGG network model may be acquired, the first image (or the second image) may be inputted into the VGG network model, and features may be extracted from intermediate layers Relu3_1 and Relu4_1 of the VGG network model (Relu3_1 and Relu4_1 are names of two intermediate layers of VGGNet). A low-level feature may be outputted from the layer Relu3_1, and texture, shape and edge of the image may be maintained in a better manner. A high-level feature may be outputted from the layer Relu4_1, and semantic content information of the image may be maintained in a better manner. Through the complementary features from two intermediate layers, the feature matrix may include more image information, so as to improve an effect of the target image generated subsequently.

In this embodiment of the present disclosure, the first feature matrix may be determined in accordance with the output results from the two first intermediate layers of the convolutional neural network model, and the second feature matrix may be determined in accordance with the output results from the two second intermediate layers of the convolutional neural network model. Hence, the first feature matrix may include the texture, the shape and the semantic content information of the first image simultaneously, and the second feature matrix may include the texture, the shape and the semantic content information of the second image simultaneously, so as to improve the effect of the target image generated subsequently.

An order of Step 203' may not be limited to that mentioned hereinabove, as long as it is performed subsequent to Step 201 and prior to Step 104.

Step 2041: acquiring a target matrix in accordance with the first feature matrix, the second feature matrix and the association matrix.

The association matrix may include an association relation between the semantic regions of the first segmentation image and the semantic regions of the second segmentation image. The regions (i.e., pixel points) of the second image to be transferred to the first image may be determined in accordance with the association matrix. The first feature matrix may be used to represent the first image, and the second feature matrix may be used to represent the second image. The target matrix may be acquired in accordance with the first feature matrix representing the first image, the second feature matrix representing the second image, and the association matrix representing the association relation between the semantic regions of the first image and the semantic regions of the second image.

To be specific, the acquiring the target matrix in accordance with the first feature matrix, the second feature matrix and the association matrix may include: multiplying the second feature matrix by the association matrix to acquire an intermediate feature matrix; and adding the intermediate feature matrix to the first feature matrix to acquire the target matrix.

As mentioned above, the second feature matrix may be multiplied by the association matrix to acquire the intermediate feature matrix (which may be considered as a feature map). Through the intermediate feature matrix, it is equivalent to re-arranging the pixels in the second image in such a manner that a distribution order of the semantic regions in the second image is the same as a distribution order of the semantic regions in the first image.

The intermediate feature matrix may be added to the first feature matrix, i.e., information represented by the two feature matrices may be fused, to acquire the target matrix. The target matrix may include information of the first feature matrix, the second feature matrix and the association matrix.

As mentioned above, when the target matrix includes the information of the first feature matrix, the second feature matrix and the association matrix, it is able to improve the effect of the target image acquired subsequently in accordance with the target matrix.

Step 2042: inputting the target matrix into a pre-acquired decoder to acquire a target image.

The decoder may be a neural network model and it may be acquired through pre-training. For example, through the mode of acquiring the target matrix in the embodiments of the present disclosure, a sample target matrix may be acquired in accordance with a first sample image and a second sample image, and a neural network model may be trained with the sample target matrix and the first sample image as training samples, to acquire the decoder. The decoder may output the target image in accordance with the target matrix.

Steps 2041 and 2042 may be specific implementation modes of Step 104.

As mentioned above, the target matrix may be acquired in accordance with the first feature matrix, the second feature matrix and the association matrix, and then the target matrix may be inputted into the pre-acquired decoder to acquire the target image. Style transfer may be performed in accordance with the semantic information about the image, so as to provide the target image with a better effect.

In a possible embodiment of the present disclosure, pixel points at different semantic regions in the first segmentation image and the second segmentation image may have different marks, and pixel points at a same semantic region may have a same mark. For example, the pixel points at the same semantic region may be marked in a same color, while the pixel points at different semantic regions may be marked in different colors.

Correspondingly, the determining the association matrix between the first segmentation image and the second segmentation image may include: with respect to each first pixel point i in the first segmentation image, comparing the first pixel point i with each second pixel point j in the second segmentation image, and when a mark of the first pixel point i is the same as a mark of the second pixel point j, setting a value of the association matrix in an i^{th} row and a j^{th} column as a first numerical value; and when the mark of the first pixel point i is different from the mark of the second pixel point j, setting the value of the association matrix in the i^{th} row and the j^{th} column as a second numerical value, where i is greater than 0 and smaller than or equal to N, j is greater than 0 and smaller than or equal to N, N represents the quantity of pixels in the first image, the first image has a same image size as the second image, i.e., the quantity of pixels in the first image is the same as the quantity of pixels in the second image, and the association matrix has a size of N^{∗}N.

To be specific, the pixel points in the first segmentation image may be traversed, and each first pixel point i in the first segmentation image may be compared with each second pixel point j in the second segmentation image. For example, when each of the first segmentation image and the second segmentation image has N pixel points, the first pixel point in the first segmentation image may be compared with the N pixel points in the second segmentation image sequentially.

When the mark of the first pixel point i is the same as the mark of the second pixel point j, i.e., the first pixel point i and the second pixel point j belong to same semantics, e.g., a hair semantic region, the value of the association matrix in the i^{th} row and the j^{th} column may be set as a first numerical value, e.g., 1.

When the mark of the first pixel point i is different from the mark of the second pixel point j, i.e., the first pixel point i and the second pixel point j belong to different semantics, e.g., the first pixel point i belongs to the hair semantic region while the second pixel point j belongs to an eye semantic region, the value of the association matrix in the i^{th} row and the j^{th} column may be set as a second numerical value, e.g., 0. The first numerical value and the second numerical value may each be of any other value, which will not be particularly defined herein. Preferably, a length and a width of the first image may be the same.

As mentioned hereinabove, through the creation of the association matrix, it is able to establish the relation between the semantic regions in the first image and the semantic regions in the second image, and then determine the pixel points in the second image to be transferred and the pixel points in the second image not to be transferred in accordance with the association matrix. Hence, when acquiring the target image in accordance with the association matrix subsequently, it is able to provide the target image with a better effect.

According to the image processing method in the embodiments of the present disclosure, based on a style attention mechanism, the segmentation sematic images may be inputted explicitly, the model may automatically learn association information between the semantic images, so as to achieve a style transfer effect.

Fig.3 is a flow chart of an image processing method according to an embodiment of the present disclosure. As shown in Fig.3, the image processing method includes: with respect to each pair of a content image (i.e., a first image) and a style image (i.e., a second image), acquiring a content image feature and a style image feature (i.e., a first feature matrix and a second feature matrix) through an image encoder (i.e., a convolutional neural network model, e.g., VGG network model); acquiring semantic segmentation images (i.e., a first segmentation image and a second segmentation image) of the content image and the style image respectively through a semantic segmentation model or artificial annotation; modeling semantic association information between the two semantic segmentation images through an attention module (i.e., acquiring an association matrix through the attention module); inputting the semantic association information as well as the content image feature and the style image feature previously extracted into a fusion module to acquire a semantic correspondence between the content feature and the style feature (i.e., a target matrix); and inputting the target matrix into a decoder to acquire a final generation result image (i.e., a target image).

An open source semantic segmentation model may be directly adopted to perform the semantic segmentation on the image. For example, a face image may be segmented into several parts, e.g., cheek, eyebrow, eye, lip, hair and background, and these parts may be marked in different colors to differentiate different semantic regions form each other.

The style image may be annotated artificially. A face in the style image may be segmented into different regions such as cheek, eye and hair, and same semantics may be marked in a same color in both the style image and the content image. For example, the hair may be marked in deep green in both the content image and the style image, and thus the hair regions in the content image and the style image may be acquired, so as to achieve the style transfer at the same semantic region.

The semantic segmentation images of the content image and the style image may be inputted into the attention module, so that the attention module automatically learns the association between the two semantic segmentation images. For example, when the semantic segmentation image of the content image is mc, the semantic segmentation image of the style image is ms and they both have a size of M×M, a relation between any two pixel points in the two semantic segmentation images may be calculated to acquire an association matrix S. In other words, when an (i1)^{th} point in the image mc and a (j1)^{th} point in the image ms belong to the same semantics (e.g., the hair), a value the position of the association matrix S in an (i1)^{th} row and a (j1)^{th} column may be 1, and otherwise it may be 0. The resultant association matrix S may have a size of M^{2∗}M².

Based on the association matrix S, it is able to determine the position to be transferred. The style feature image may be multiplied by the association matrix S to acquire a new feature image, which is equivalent to re-arranging the pixels in the style image in such a manner that the distribution of the pixels in the style image conforms to the distribution of the pixels in the content image. Then, the new feature image may be added to the content image feature to acquire an output of the fusion module, i.e., the fusion module may output the target feature. Finally, the target feature may be inputted into the decoder to generate a final result image. When the style transfer is performed on the basis of the semantic information as mentioned hereinabove, it is able to prevent the generation of an image in mixed colors. In addition, once the model (e.g., the decoder) has been trained successfully, it is able to use the model to process the new image without any necessity to be re-trained, thereby to remarkably reduce a processing time.

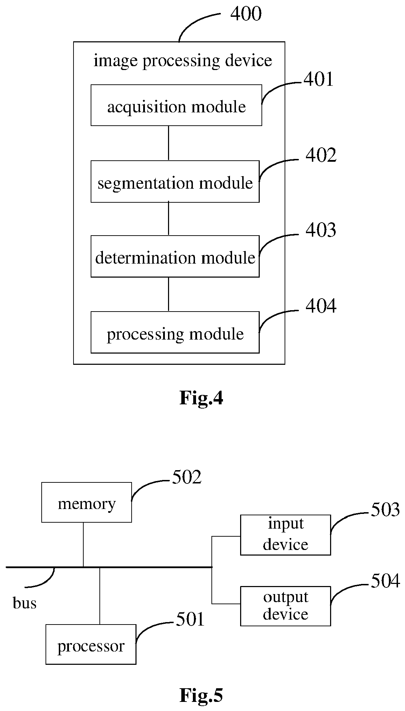

Fig.4 is a schematic view showing an image processing device according to an embodiment of the present disclosure. As shown in Fig.4, the image processing device 400 includes: an acquisition module configured to acquire a first image and a second image; a segmentation module configured to perform semantic region segmentation on the first image and the second image to acquire a first segmentation image and a second segmentation image; a determination module configured to determine an association matrix between the first segmentation image and the second segmentation image; and a processing module configured to process the first image in accordance with the association matrix to acquire a target image.

The image processing device 400 may further include a feature extraction module configured to perform feature extraction on the first image and the second image to acquire a first feature matrix and a second feature matrix respectively. The processing module may include: a first acquisition sub-module configured to acquire a target matrix in accordance with the first feature matrix, the second feature matrix and the association matrix; and a decoding sub-module configured to input the target matrix into a pre-acquired decoder to acquire a target image.

Further, the feature extraction module may include: a first feature extraction sub-module configured to input the first image into a pre-acquired convolutional neural network model to acquire the first feature matrix, the first feature matrix being determined in accordance with output results from two first intermediate layers of the convolutional neural network model; and a second feature extraction sub-module configured to input the second image into the convolutional neural network model to acquire the second feature matrix, the second feature matrix being determined in accordance with output results from two second intermediate layers of the convolutional neural network model.

The first acquisition sub-module is further configured to multiply the second feature matrix by the association matrix to acquire an intermediate feature matrix, and add the intermediate feature matrix to the first feature matrix to acquire the target matrix.

Further, pixel points at different semantic regions in the first segmentation image and the second segmentation image may use different marks, and pixel points at a same semantic region may use a same mark. The determination module is further configured to: with respect to each first pixel point i in the first segmentation image, compare the first pixel point i with each second pixel point j in the second segmentation image, and when a mark of the first pixel point i is the same as a mark of the second pixel point j, set a value of the association matrix in an i^{th} row and a j^{th} column as a first numerical value; and when the mark of the first pixel point i is different from the mark of the second pixel point j, set the value of the association matrix in the i^{th} row and the j^{th} column as a second numerical value, where i is greater than 0 and smaller than or equal to N, j is greater than 0 and smaller than or equal to N, N represents the quantity of pixels in the first image, and the first image has a same image size as the second image.

In the embodiments of the present disclosure, the image processing device 400 may be used to implement the steps to be implemented by the electronic device in the method embodiment in Fig. 1 with a same technical effect, which will not be further defined herein.

The present disclosure further provides in some embodiments an electronic device, a computer program product and a computer-readable storage medium.

Fig.5 is a schematic block diagram of an exemplary electronic device in which embodiments of the present disclosure may be implemented. The electronic device is intended to represent various kinds of digital computers, such as a laptop computer, a desktop computer, a work station, a personal digital assistant, a server, a blade server, a main frame or other suitable computers. The electronic device may also represent various kinds of mobile devices, such as a personal digital assistant, a cell phone, a smart phone, a wearable device and other similar computing devices. The components shown here, their connections and relationships, and their functions, are meant to be exemplary only, and are not meant to limit implementations of the present disclosure described and/or claimed herein.

As shown in Fig.5, the electronic device may include one or more processors 501, a memory 502, and interfaces for connecting the components. The interfaces may include high-speed interfaces and low-speed interfaces. The components may be interconnected via different buses, and installed on a public motherboard or installed in any other mode according to the practical need. The processor is configured to process instructions to be executed in the electronic device, including instructions stored in the memory and used for displaying graphical user interface (GUI) pattern information on an external input/output device (e.g., a display device coupled to an interface). In some other embodiments of the present disclosure, if necessary, a plurality of processors and/or a plurality of buses may be used together with a plurality of memories. Identically, a plurality of electronic devices may be connected, and each electronic device is configured to perform a part of necessary operations (e.g., as a server array, a group of blade serves, or a multi-processor system). In Fig.5, one processor 501 is taken as an example.

The memory 502 may be just a non-transient computer-readable storage medium in the embodiments of the present disclosure. The memory is configured to store therein instructions capable of being executed by at least one processor, so as to enable the at least one processor to execute the above-mentioned image processing method. In the embodiments of the present disclosure, the non-transient computer-readable storage medium is configured to store therein computer instructions, and the computer instructions may be used by a computer to implement the above-mentioned image processing method.

As a non-transient computer-readable storage medium, the memory 502 may store therein non-transient software programs, non-transient computer-executable programs and modules, e.g., program instructions/modules corresponding to the above-mentioned image processing method (e.g., the acquisition module 401, the segmentation module 402, the determination module 403 and the processing module 404 in Fig.4). The processor 501 is configured to execute the non-transient software programs, instructions and modules in the memory 502, so as to execute various functional applications of a server and data processings, i.e., to implement the above-mentioned image processing method.

The memory 502 may include a program storage area and a data storage area. An operating system and an application desired for at least one function may be stored in the program storage area, and data created in accordance with the use of the electronic device for implementing the imaging processing method may be stored in the data storage area. In addition, the memory 502 may include a high-speed random access memory, and a non-transient memory, e.g., at least one magnetic disk memory, a flash memory, or any other non-transient solid-state memory. In some embodiments of the present disclosure, the memory 502 may optionally include memories arranged remotely relative to the processor 501, and these remote memories may be connected to the electronic device for implementing image processing via a network. Examples of the network may include, but not limited to, Internet, Intranet, local area network, mobile communication network or a combination thereof.

The electronic device for implementing the image processing method may further include an input device 503 and an output device 504. The processor 501, the memory 502, the input device 503 and the output device 504 may be connected to each other via a bus or connected in any other way. In Fig.5, they are connected to each other via the bus.

The input device 503 may receive digital or character information, and generate a key signal input related to user settings and function control of the electronic device for implementing the image processing method. For example, the input device 503 may be a touch panel, a keypad, a mouse, a trackpad, a touch pad, an indicating rod, one or more mouse buttons, a trackball or a joystick. The output device 504 may include a display device, an auxiliary lighting device (e.g., light-emitting diode (LED)) and a haptic feedback device (e.g., vibration motor). The display device may include, but not limited to, a liquid crystal display (LCD), an LED display or a plasma display. In some embodiments of the present disclosure, the display device may be a touch panel.

Various implementations of the aforementioned systems and techniques may be implemented in a digital electronic circuit system, an integrated circuit system, an application specific integrated circuit (ASIC), computer hardware, firmware, software, and/or a combination thereof. The various implementations may include an implementation in form of one or more computer programs. The one or more computer programs may be executed and/or interpreted on a programmable system including at least one programmable processor. The programmable processor may be a special purpose or general purpose programmable processor, may receive data and instructions from a storage system, at least one input device and at least one output device, and may transmit data and instructions to the storage system, the at least one input device and the at least one output device.

These computer programs (also called as programs, software, software application or codes) may include machine instructions for the programmable processor, and they may be implemented using an advanced process and/or an object oriented programming language, and/or an assembly/machine language. The terms "machine-readable medium" and "computer-readable medium" used in the context may refer to any computer program products, devices and/or apparatuses (e.g., magnetic disc, optical disc, memory or programmable logic device (PLD)) capable of providing the machine instructions and/or data to the programmable processor, including a machine-readable medium that receives a machine instruction as a machine-readable signal. The term "machine-readable signal" may refer to any signal through which the machine instructions and/or data are provided to the programmable processor.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or that includes a middle-ware component (e.g., an application server), or that includes a front-end component (e.g., a client computer having a graphical user interface or a Web browser through which a user can interact with an implementation of the system and technique), or any combination of such back-end, middleware, or front-end components. The components of the system can be interconnected by any form or medium of digital data communication (e.g., a communication network). Examples of communication networks include a local area network (LAN), a wide area network (WAN) and the Internet.

The computer system can include a client and a server. The client and server are generally remote from each other and typically interact through a communication network. The relationship of client and server arises by virtue of computer programs running on respective computers and having a client-server relationship to each other.

In the embodiments of the present disclosure, the first image and the second image may be acquired, the semantic region segmentation may be performed on the first image and the second image to acquire the first segmentation image and the second segmentation image respectively, the association matrix between the first segmentation image and the second segmentation image may be determined, and then the first image may be processed in accordance with the association matrix to acquire the target image. Because the association relation between the semantic regions in the first image and the second image, i.e., semantic information about the first image and the second image, has been taken into consideration, it is able to provide the target image with a better effect, thereby to improve a style transfer effect. The first feature matrix may be determined in accordance with the output results from the two first intermediate layers of the convolutional neural network model, and the second feature matrix may be determined in accordance with the output results from the two second intermediate layers of the convolutional neural network model. Hence, the first feature matrix may include the texture, the shape and the semantic content information of the first image simultaneously, and the second feature matrix may include the texture, the shape and the semantic content information of the second image simultaneously, so as to improve the effect of the target image generated subsequently.

The target matrix may include the information represented by the first feature matrix, the second feature matrix and the association matrix, so it is able to improve the effect of the target image acquired subsequently in accordance with the target matrix.

The target matrix may be acquired in accordance with the first feature matrix, the second feature matrix and the association matrix, and then the target matrix may be inputted into the pre-acquired decoder to acquire the target image. Style transfer may be performed in accordance with the semantic information about the image, so as to provide the target image with a better effect.

Through the creation of the association matrix, it is able to establish the relation between the semantic regions in the first image and the semantic regions in the second image, and then determine the pixel points in the second image to be transferred and the pixel points in the second image not to be transferred in accordance with the association matrix. Hence, when acquiring the target image in accordance with the association matrix subsequently, it is able to provide the target image with a better effect.

It should be appreciated that, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, and there is no limitation in this regard.

The foregoing specific implementations constitute no limitation on the scope of the present disclosure. It is appreciated by those skilled in the art, various modifications, combinations, sub-combinations and replacements may be made according to design requirements and other factors. Any modifications, equivalent replacements and improvements made without deviating from the spirit and principle of the present disclosure shall be deemed as falling within the scope of the present disclosure.

## Claims

1. An image processing method, comprising:
acquiring a first image and a second image (101, 201);
performing semantic region segmentation on the first image and the second image to acquire a first segmentation image and a second segmentation image respectively (102, 202);
determining an association matrix between the first segmentation image and the second segmentation image (103, 203);
processing the first image in accordance with the association matrix to acquire a target image (104).

2. The image processing method according to claim 1, wherein subsequent to acquiring the first image and the second image (101, 201) and prior to processing the first image in accordance with the association matrix to acquire the target image (104), the image processing method further comprises:
performing feature extraction on the first image and the second image to acquire a first feature matrix and a second feature matrix respectively (203'),
the processing the first image in accordance with the association matrix to acquire the target image (104) comprises:
acquiring a target matrix in accordance with the first feature matrix, the second feature matrix and the association matrix(2041);
inputting the target matrix into a pre-acquired decoder to acquire a target image(2042).

3. The image processing method according to claim 2, wherein the performing the feature extraction on the first image and the second image to acquire the first feature matrix and the second feature matrix respectively (203') comprises:
inputting the first image into a pre-acquired convolutional neural network model to acquire the first feature matrix, the first feature matrix being determined in accordance with output results from two first intermediate layers of the convolutional neural network model;
inputting the second image into the convolutional neural network model to acquire the second feature matrix, the second feature matrix being determined in accordance with output results from two second intermediate layers of the convolutional neural network model.

4. The image processing method according to claim 2, wherein the acquiring the target matrix in accordance with the first feature matrix, the second feature matrix and the association matrix (2041) comprises:
multiplying the second feature matrix by the association matrix to acquire an intermediate feature matrix;
adding the intermediate feature matrix to the first feature matrix to acquire the target matrix.

5. The image processing method according to claim 1, wherein pixel points at different semantic regions in the first segmentation image and the second segmentation image use different marks, and pixel points at a same semantic region use a same mark;
the determining the association matrix between the first segmentation image and the second segmentation image (103, 203) comprises:
with respect to each first pixel point i in the first segmentation image, comparing the first pixel point i with each second pixel point j in the second segmentation image, and when a mark of the first pixel point i is the same as a mark of the second pixel point j, setting a value of the association matrix in an i^{th} row and a j^{th} column as a first numerical value;
when the mark of the first pixel point i is different from the mark of the second pixel point j, setting the value of the association matrix in the i^{th} row and the j^{th} column as a second numerical value,
where i is greater than 0 and smaller than or equal to N, j is greater than 0 and smaller than or equal to N, N represents the quantity of pixels in the first image, and an image size of the first image is same as an image size of the second image.

6. An image processing device (400), comprising:
an acquisition module (401) configured to acquire a first image and a second image;
a segmentation module (402) configured to perform semantic region segmentation on the first image and the second image to acquire a first segmentation image and a second segmentation image respectively;
a determination module (403) configured to determine an association matrix between the first segmentation image and the second segmentation image;
a processing module (404) configured to process the first image in accordance with the association matrix to acquire a target image.

7. The image processing device (400) according to claim 6, further comprising:
a feature extraction module configured to perform feature extraction on the first image and the second image to acquire a first feature matrix and a second feature matrix respectively,
wherein the processing module (404) comprises:
a first acquisition sub-module configured to acquire a target matrix in accordance with the first feature matrix, the second feature matrix and the association matrix;
a decoding sub-module configured to input the target matrix into a pre-acquired decoder to acquire a target image.

8. The image processing device (400) according to claim 7, wherein the feature extraction module comprises:
a first feature extraction sub-module configured to input the first image into a pre-acquired convolutional neural network model to acquire the first feature matrix, the first feature matrix being determined in accordance with output results from two first intermediate layers of the convolutional neural network model;
a second feature extraction sub-module configured to input the second image into the convolutional neural network model to acquire the second feature matrix, the second feature matrix being determined in accordance with output results from two second intermediate layers of the convolutional neural network model.

9. The image processing device (400) according to claim 7, wherein the first acquisition sub-module is configured to:
multiply the second feature matrix by the association matrix to acquire an intermediate feature matrix, and add the intermediate feature matrix to the first feature matrix to acquire the target matrix.

10. The image processing device (400) according to claim 6, wherein pixel points at different semantic regions in the first segmentation image and the second segmentation image use different marks, and pixel points at a same semantic region use a same mark;
the determination module (403) is configured to:
with respect to each first pixel point i in the first segmentation image, compare the first pixel point i with each second pixel point j in the second segmentation image, and when a mark of the first pixel point i is the same as a mark of the second pixel point j, set a value of the association matrix in an i^{th} row and a j^{th} column as a first numerical value;
when the mark of the first pixel point i is different from the mark of the second pixel point j, set the value of the association matrix in the i^{th} row and the j^{th} column as a second numerical value,
where i is greater than 0 and smaller than or equal to N, j is greater than 0 and smaller than or equal to N, N represents the quantity of pixels in the first image, and an image size of the first image is same as an image size of the second image.

11. An electronic device, comprising:
at least one processor (501); and
a memory (502) configured to be in communication connection with the at least one processor (501),
wherein the memory (502) is configured to store therein an instruction capable of being executed by the at least one processor (501), wherein the processor (501) is configured to execute the instruction to implement the image processing method according to any one of claims 1 to 5.

12. A non-transient computer-readable storage medium storing therein a computer instruction, wherein the computer instruction is configured to be executed by a computer to implement the image processing method according to any one of claims 1 to 5.

13. A computer program product comprising a computer program, wherein when the computer program is executed by a processor (501), the image processing method according to any one of claims 1 to 5 is implemented.
